# EUROPÄISCHE PATENTSCHRIFT

(11) **EP 2 367 767 B1**
(45) Veröffentlichungstag und Bekanntmachung des Hinweises auf die Patenterteilung: **03.08.2016**
(21) Anmeldenummer: 09805703.7
(22) Anmeldetag: 17.12.2009
(51) Int. Cl.: C03B 37/014

(54) **MEHRDÜSIGER ROHRFÖRMIGER PLASMA-ABSCHEIDEBRENNER ZUR HERSTELLUNG VON VORFORMEN ALS HALBZEUGE FÜR OPTISCHE FASERN**
MULTI-NOZZLE TUBULAR PLASMA DEPOSITION BURNER FOR PRODUCING PREFORMS AS SEMI-FINISHED PRODUCTS FOR OPTICAL FIBERS
TORCHE À PLASMA TUBULAIRE À PLUSIEURS BUSES, POUR FABRIQUER DES ÉBAUCHES EN TANT QUE SEMI-PRODUITS POUR FIBRES OPTIQUES

(30) Priorität: 19.12.2008 DE 102008064146; 25.02.2009 DE 102009010497
(43) Veröffentlichungstag der Anmeldung: 28.09.2011
(73) Patentinhaber: J-Fiber GmbH, 07751 Jena (DE)
(72) Erfinder: AUTH, Matthias, 45289 Essen (DE); KÖTZING, Jörg, 07747 Jena (DE); ENGLER, Hans, 07751 Jena-Isserstedt (DE); HÄMMERLE, Wolfgang, 07745 Jena (DE); BREHM, Lothar, 07743 Jena (DE)
(74) Vertreter: Kruspig, Volkmar
(86) Internationale Anmeldenummer: PCT/EP2009/067441
(87) Internationale Veröffentlichungsnummer: WO 2010/070062

(56) Entgegenhaltungen:
- EP-A1- 0 980 849
- EP-A1- 1 426 340
- WO-A2-2007/079127
- DE-C1- 10 231 037
- JP-A- 63 319 231

## Beschreibung

Die Erfindung betrifft einen mehrdüsigen, rohrförmigen Plasma-Abscheidebrenner zur Herstellung von Vorformen als Halbzeuge für optische Fasern, wobei dem Brenner ein Medienstrom, enthaltend Glasausgangsmaterial und ein Trägergas, zugeführt wird, Mitteln zur Zuführung mindestens eines Dotanden über mindestens ein Precursorgas sowie einer im Wesentlichen senkrechten Orientierung der Brennerlängsachse zur Mittelachse des Substrats gemäß Oberbegriff des Patentanspruchs 1 sowie ein Verfahren zur Herstellung von Vorformen als Halbzeuge für optische Fasern.

Induktions-Plasmabrenner sind seit den frühen 60er Jahren bekannt und werden vorzugsweise zur Materialbearbeitung, zur Synthese von feinkörnigen Stäuben und in der Spektroskopie als Anregungsquelle eingesetzt. Brenner zur Erzeugung von induktiv gekoppelten Plasmen bei Atmosphärendruck bestehen üblicherweise aus drei konzentrisch angeordneten Quarzrohren. Bei bekannten Konstruktionen bewegt sich das Trägergas mit Laminarströmung durch ein Entladungsrohr mit kleinem Durchmesser. Bei größeren Durchmessern des Entladungsrohrs bewegt sich das Trägergas in einer wirbelartigen Strömung.

Die Anwendung des Plasmaverfahrens zur Herstellung von Quarzglas mit niedrigem OH-Gehalt und zur Herstellung von dotiertem Quarzglas sowie die Ausnutzung des Plasmaverfahrens für die Fertigung von Preformen bei der Herstellung von Lichtleitern ist aus der DE 25 36 457 vorbekannt. Für die Anwendung zur Herstellung von Lichtwellenleitern müssen verschiedene Bedingungen erfüllt sein. So muss das Kern- und Mantelglas aus Quarzglas hoher Reinheit bestehen und das Mantelglas muss einen definierten Brechungsindex aufweisen, der zur Ausbildung einer entsprechenden Wellenleitung unter der Brechzahl des Kernglases liegt.

Zur Erzielung einer vorgegebenen Erniedrigung des Brechungsindex des Mantelglases wird in die Flamme des Plasmabrenners zusätzlich eine wasserstofffreie, sich in Hitze zersetzende und in Dampfform vorliegende Fluorverbindung eingeleitet.
Die Herstellung eines rotationssymmetrischen Halbzeugs für die Lichtleiter-Fertigung gelingt dadurch, dass als Target oder Substrat ein Quarzzylinder eingesetzt wird und die Abscheidung definierter fluorhaltiger Mantelglasschichten auf dem rotierenden Kernglaszylinder bei gleichzeitiger Relativbewegung des Plasmabrenners zum Kernglaszylinder erfolgt.

Bei der bereits erwähnten DE 25 36 457 wird ein Brenner erläutert, der aus drei konzentrisch angeordneten Quarzglasrohren besteht. Das äußere Rohr soll das mittlere und dies wiederum das innere Rohr überragen. Durch das innere Rohr wird Arbeitsgas und die Siliziumverbindung einschließlich der in Dampfform vorliegenden Fluorverbindung zugeführt. Durch den Zwischenraum zwischen innerem und mittlerem Rohr sowie zwischen mittlerem Rohr und äußerem Rohr wird als Trenngas Sauerstoff eingeleitet. Das Spülen des mittleren und äußeren Rohres mit jeweils einem Trenngas hat den Vorteil, dass sich kein Siliziumdioxid am Brenner ansetzen kann. Die drei Quarzrohre sind gegeneinander und gegen die Außenatmosphäre in einer Metallfassung abgedichtet. Um das freie Ende des Außenrohrs ist die eigentliche Induktionsspule angeordnet, die von einem HF-Generator gespeist wird. Über tangential angeordnete Leitungen werden das Arbeitsgas und die beiden Trenngase zugeführt. Das Zünden der Plasmaflamme erfolgt mit Argongas. Durch die hohe Temperatur der Plasmaflamme zersetzt sich das SiCl₄ und reagiert mit Sauerstoff zu SiO₂, das auf dem Target abgeschieden und gleichzeitig gesintert wird. Auch der Fluorspender wird durch die hohe Temperatur der Plasmaflamme zersetzt und Fluor wird in das abgeschiedene glasige SiO₂ eingebaut.

Alternative Plasmabrenner-Konstruktionen sind z.B. in der DE 298 23 926 A1 offenbart. Auch bei dem dortigen Plasmabrenner wird vorzugsweise undotiertes Quarzglas auf einem rotierenden zylindersymmetrischen Target abgeschieden. Allerdings wird dort das Ziel verfolgt, Rohre bzw. Halbzeuge für die Lichtwellenleiter-Produktion herzustellen und keine fluordotierten Stufenindex-Preformen. Die im erwähnten Stand der Technik eingesetzten Plasmagase umfassen Stickstoff und Sauerstoff in einem geeigneten Verhältnis. Mediengase sind SiCl₄, Sauerstoff und ein gasförmiger Fluorspender, vorzugsweise SF₆. Der Plasmabrenner selbst besteht aus einem rohrförmigen Brennergehäuse aus Quarzglas. Eine Induktionsspule aus Kupfer ist rund um den oberen Abschnitt des äußeren Quarzrohrs vorgesehen. Weiterhin ist ein Paar von seitlich angeordneten Düsen vorhanden, welches dazu dient, die Precursoren in das Plasma einzuspritzen. Diese Einspritzdüsen bestehen aus Quarzglas und weisen einen kleinen Innendurchmesser und einen speziellen Querschnitt an der Austrittsfläche auf. Die Einspritzöffnungen selbst sind diametral entgegengesetzt und seitlich versetzt zueinander befindlich.

Die DE 102 31 037 C1 betrift ein Verfahren und eine Vorrichtung zur Herstellung einer Vorform aus synthetischem Quarzglas mittels plasmaunterstütztem Abscheideverfahren.

Die JP 63319231 betrifft ein Verfahren und eine Vorrichtung zur Herstellung von dotiertem Quarzglas mit einem Plasmabrenner.

Es kommt dort ein mehrdüsiger Abscheidebrenner zum Einsatz, dem ein wasserstofffreier Medienstrom, enthaltend ein Glasausgangsmaterial und ein Trägergas, zugeführt wird. Das Glasausgangsmaterial wird mittels des Abscheidebrenners in eine Plasmazone eingebracht und darin unter Bildung von SiO₂-Partikeln oxidiert. Die SiO₂-Partikel werden auf einer Ablagerungsfläche abgeschieden und dabei direkt verglast.

Um die Abscheideeffizienz zu erhöhen, wird dort vorgeschlagen, dass der Medienstrom mittels Abscheidebrenners in Richtung auf die Plasmazone fokussiert wird.

Die WO 2007/079127 A2 offenbart einen Plasmabrenner mit einem Gehäuse, in dem Plasma auf ein darüber angeordnetes Substrat geleitet wird. Dem Plasmabrenner sind Zugänge zugeordnet, über die Chemikalien in die Plasmaflamme injiziert werden können. Diese können insbesondere senkrecht zur Richtung des Plasmabrenners ausgerichtet sein. Die Form der Plasmaströmung und die Art und Weise des Auftreffens des Plasmas auf das Substrat wird durch eine Anordnung aus Ringen bestimmt, die aus Quarzglas ausgebildet sind.

Aus dem Vorgenannten ist es daher Aufgabe der Erfindung, einen weiterentwickelten mehrdüsigen, rohrförmigen Plasma-Abscheidebrenner zur Herstellung von Vorformen als Halbzeuge für optische Fasern anzugeben, mit welchem es gelingt, den Abscheidegrad von SiO₂ auf dem Substrat bzw. Target und die Fluor-Einbaueffizienz zu verbessern. Hierfür ist es eine Teilaufgabe der Erfindung, mit Hilfe des zu gestaltenden Abscheidebrenners definierte Abscheidebedingungen einstellen zu können, die die gewünschte hohe Abscheiderate bei hinreichender Schichtqualität gewährleisten. Damit soll letztendlich eine Reduzierung des spezifischen Material-Energieverbrauchs und eine Kostenersparnis die Folge sein.

Die Lösung der Aufgabe der Erfindung erfolgt vorrichtungsseitig durch die Merkmalskombination nach Patentanspruch 1 sowie mit einem Verfahren gemäß der Lehre nach Patentanspruch 19.

Es wird demnach von einem mehrdüsigen rohrförmigen Plasma-Abscheidebrenner zur Herstellung von Vorformen als Halbzeuge für optische Fasern ausgegangen, wobei dem Brenner ein Medienstrom, enthaltend Glasausgangsmaterial und ein Trägergas, zugeführt wird. Weiterhin sind Mittel zur Zuführung mindestens eines Dotanden über mindestens ein Precursorgas vorgesehen, wobei die Brennerlängsachse sich im Wesentlichen senkrecht zur Mittelachse des üblicherweise rotierenden Substrats befindet. Dabei wird ein erster Teilstrom des Precursorgases über mindestens eine in Brennerlängsachse verlaufende Düse dem Plasma und dem Substrat und ein zweiter Teilstrom des Precursorgases über eine weitere Düse, dem Plasma und dem Substrat derart zugeführt, dass sich die Teilströme in Substratnähe vereinen.

Erfindungsgemäß ist die weitere Düse als ein Düsenpaar, umfassend jeweils eine Gruppe von Einzeldüsen als Düsenkette mit zwei oder mehr Einzeldüsen, versetzt zur Brennerlängsachse ausgebildet. Das Düsenpaar zum Erzeugen des zweiten Teilstroms befindet sich außerhalb des eigentlichen Brenners, und zwar beabstandet von bezogen auf das Substrat nächsten Brennerrohr im Raum zwischen Substratoberfläche und Brenner. Durch die versetzt gegenüber liegenden Düsenketten ist der zweite Teilstrom tangential bezüglich des Substrates orientiert. Dabei sind die seitlichen Düsenketten so angeordnet, dass sich die Precursorgasströme unterhalb des Substrats treffen und sich die Strömungen im Zentrum des Plasmastroms nahezu aufheben. Dabei weisen die Düsenketten der Düsenpaare eine zueinander verstellbare Winkelposition auf.

Demnach erfolgt eine Precursorgas-Zuführung zunächst quasi senkrecht von unten zur Achse des Substrats über eine Rohrdüseneinrichtung, die z.B. eine oder mehrere kreisförmige, ovale oder quadratische bzw. vieleckige Querschnittsformen als Austrittsöffnung besitzt, wobei der Querschnitt bzw. die Summe der Querschnitte dem gewünschten Austrittsvolumen angepasst wird. Aufgabengemäß wird der Abscheidegrad wesentlich davon erhöht, indem ein zweiter Teilstrom des Precursorgases durch mindestens zwei Düsen, die als Düsenketten ausgebildet sind, zugeführt wird, die sich seitlich unterhalb des Substrats in der Nähe des Brenners befinden. Das Verhältnis der Teilströme ist entsprechend der Substrat- oder Targetgröße einstellbar.

Das Düsenpaar für den zweiten Teilstrom ist in einer Ausführungsform versetzt zur Brennerlängsachse angeordnet, wobei wiederum das Düsenpaar in einem Winkel abweichend von der Brennerlängsachse befindlich ist. Dieser Winkel kann in einem Bereich von z.B. 45° bis 135° bezogen auf die Brennerlängsachse variieren.

Wie bereits erwähnt, umfasst das Düsenpaar jeweils eine Düsenkette wobei sich die Düsenketten der Düsenpaare in einem vorgegebenen Winkel, üblicherweise jedoch nicht unmittelbar, gegenüberliegen. Dieser vorerwähnte Winkel ist verstellbar.

Das Düsenpaar bzw. die jeweiligen Düsenketten sind bei einer Ausführungsform beweglich und verstellbar ausgeführt, wobei die optimale Position auch während des Beschichtungsprozesses in Abhängigkeit von verschiedenen Prozessparametern, wie z.B. der Bewegungsrichtung des Substrats, wahlweise automatisch oder manuell eingestellt werden kann.

Der Brenner umfasst an sich bekannte, in Brennerlängsachse verlaufende Rohre, wobei diese erfindungsgemäß als zwei ineinander geführte Rohre ausgebildet sind. Diese Rohre können aus einem Glas- und/oder Keramikmaterial, aber auch aus einem organischen Polymer oder einem Polymerverbund bestehen. Denkbar ist hier auch die Verwendung eines Glas- oder Keramikmaterials, das mit einem organischen Material, z.B. einer organischen Folie beschichtet wurde. Mindestens eines der ineinander geführten Rohre ist dickwandig ausgeführt, d.h. besitzt z.B. eine Dicke von ≥ 2mm. Die Wandstärke des stärksten Rohres kann im Bereich zwischen ≥ 2 mm bis im Wesentlichen 20 mm gewählt werden.

Die Rohre sind konzentrisch oder vom Konzentrischen abweichend ineinander positioniert, wobei die Wandstärke im Bereich zwischen >5 mm bis im Wesentlichen 20 mm liegt.

Das Innere der Rohranordnung weist einen größeren Abstand vom Plasmaraum als das äußere Rohr der Rohranordnung auf.

Weiterhin ist erfindungsgemäß vorgesehen, dass die Precursorgas-Zuführung über eine Kammer erfolgt, d.h. es weist der Abscheidebrenner mindestens eine derartige Kammer auf, die der Gasmischung oder Gasstromberuhigung dient.

Die ein- oder mehrzeilig ausgeführten Düsenketten können eine Plattenform besitzen, welche eine Vielzahl von Düsenbohrungen gleicher oder unterschiedlicher Gestalt aufweist. Die Düsenbohrungen können vorzugsweise im Winkel von 35° bis 55° angebracht sein, so dass durch diese Anordnung eine Helix-Strömung erzwungen wird.

Ergänzend besteht die Möglichkeit, die Brennerrohranordnung mit einem Stickstoffvorhang zu umgeben, der wiederum durch ein umgreifendes Rohr zuführbar ist.

Auch die in Brennerlängsachsenrichtung verlaufende Düse für den ersten Teilgasstrom kann eine Düsengruppe umfassen. Diese Düsengruppe kann, wie eingangs dargelegt, Einzeldüsen aufweisen, welche unterschiedliche oder veränderbare Düsenquerschnitte oder Querschnittsflächen besitzen.

Durch die erfindungsgemäße größere Wandstärke der eingesetzten Rohre insbesondere für das innere Plasma-Brennerrohr wird eine vorzeitige Abscheidung der Rohstoffe am Brenner verhindert und damit die Prozessstabilität und die Lebensdauer der Brenner erhöht.

Der Abstand der Düsen des Düsenpaars zur Erzeugung des zweiten Teilstroms beträgt bei einer bevorzugten Ausführungsform ab 0,1 mm bis 10 mm bezüglich des oberen Randes des am höchsten aufragenden Plasmarohrs, d.h. desjenigen Rohres, das sich am nächsten zum Substrat befindet.

Bei einer weiteren Ausführungsform der Erfindung besteht die Möglichkeit, den Abstand der Düsen des Düsenpaars zur Erzeugung des zweiten Teilstroms bezogen auf den oberen Rand des am höchsten aufragenden Plasmarohrs bewusst zu vergrößern. Vorteile ergeben sich hier durch die dann reduzierte Temperatur am Ort der Anbringung bzw. Anordnung der Düsen des Düsenpaars, so dass temperaturbedingte negative Einflüsse auf das zugeführte Gas oder Gasgemisch vermieden werden können.

Die Düsen zur Erzeugung des ersten Teilstroms sind so ausgeführt, dass die Möglichkeit besteht, das Gas in einem Winkel abweichend von der Senkrechten zur Substratlängsachse einzuleiten. Bevorzugt ist der Einleitwinkel im Bereich zwischen 35° bis 55° festgelegt, um im Hochrate-Abscheideprozess den Glasruß optimal auf die Oberfläche des Substrats leiten zu können und um gleichzeitig ein Anbacken an den Brennerrohren zu verhindern.

Bei einer Kombination des erfindungsgemäßen Abscheidebrenners mit einem oder mehreren Gasbrennern ergibt sich ein besseres Klarschmelzverhalten im Hochrate-Abscheideprozess, wobei mit Hilfe des mindestens einen Zusatzbrenners die Restspannung in der fertig beschichteten Vorform gegen null gehend abgebaut wird. Ein Einsatz solcher üblichen Gasbrenner ist insbesondere dann möglich, wenn es um die Herstellung von Vorformen geht, deren Fasern im ultravioletten Bereich eingesetzt werden, wobei höhere OH-Gehalte zulässig sind.

Mit Hilfe des erfindungsgemäßen Abscheidebrenners und eines diesbezüglich zu führenden Verfahrens ist es möglich, Reaktionsgemische von verschiedenen Precursorverbindungen zu verwenden. Es kann daher ohne weiteres ein Einbau mehrerer Dotanden in die Glasmatrix vorgenommen werden. Durch das Erzeugen von Teilgasströmen ist die Verwendung von mehreren Siliziumverbindungen in variablen stöchiometrischen Verhältnissen und die Zugabe von weiteren Additiven möglich.

Durch die Zufuhr von wenigstens zwei unterschiedlichen Precursorverbindungen mittels zwei separater Düsen ist es möglich, auch miteinander reagierende Precursorverbindungen über getrennte Leitungswege zuzuführen. Beispielsweise kann der erste Teilstrom von einer SiCl₄-Zufuhr von der Unterseite des Brenners geprägt sein. Es entsteht also aus SiCl₄ und O₂ zunächst feinverteilter Soot, der aufgrund seiner hohen Oberfläche schnell mit geeigneten F-Donoren reagiert. Diese F-Donoren sind über den zweiten Teilstrom zuführbar.

Dadurch, dass die Düsen des Düsenpaars zur Erzeugung des zweiten Teilstroms einzeln und separat in x-, y- und/oder z-Richtung positioniert werden können, besteht die Möglichkeit, die Abscheideraten insgesamt zu verbessern, da die jeweilige Translations- und Rotationsgeschwindigkeit des Substrats / Stabes berücksichtigt werden kann.

Die Schrägstellung der Teilgasströme bezogen auf die Brennerlängsachse ermöglicht es, die Teilgaströme optimal in den Plasmavolumenstrom zu integrieren.

Ausgestaltend ist es weiterhin möglich, eine weitere Düsenkette außerhalb des Plasmabrenners vorzusehen, um den Stab und den Brenner zu kühlen, so dass eine definierte lokale Atmosphäre um den Reaktionsraum erzeugt werden kann. Wenn UV-absorbierende Materialien zum Einsatz kommen, besteht die Möglichkeit, die ultraviolette Belastung des Substrats bei dessen Herstellung zu reduzieren.

Die Erfindung soll nachstehend anhand eines Ausführungsbeispiels sowie unter Zuhilfenahme von Figuren näher erläutert werden.

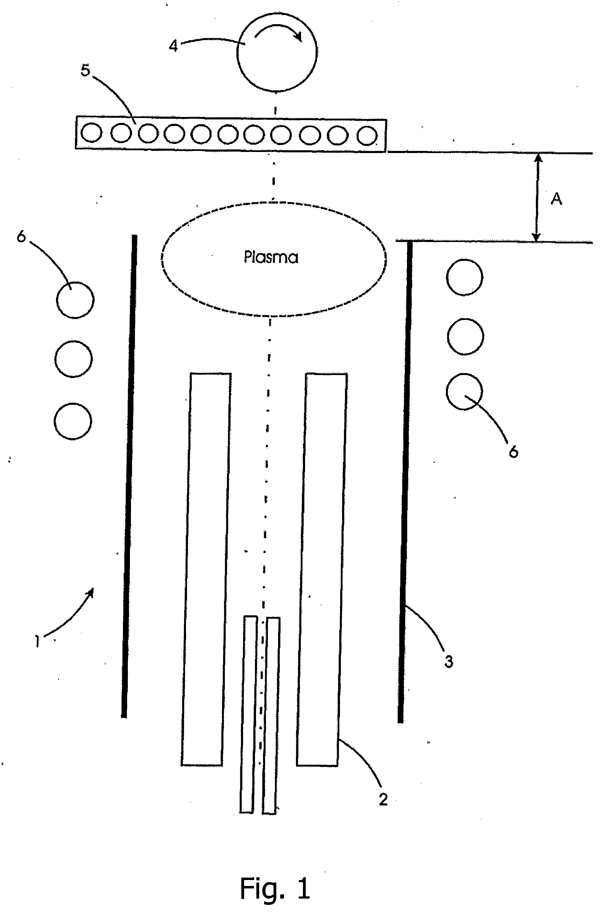

Die Fig. 1 zeigt hierbei eine prinzipielle Schnittdarstellung des erfindungsgemäßen Abscheidebrenners mit seinen wesentlichen Komponenten und deren Anordnung bezüglich eines Substrats, insbesondere eines rotierenden Kernglasstabs.

Hierbei umfasst der Brenner 1 ein äußeres Brennerrohr 3 und eine HF-Spule 6. Im äußeren Brennerrohr 3 ist im Wesentlichen konzentrisch zu diesem ein dickwandiges erstes inneres Brennerrohr 2 befindlich. Dieses hitzebeständige Rohr besteht z.B. aus Keramik oder Glas und weist eine Wandstärke von >5 mm bis z.B. 20 mm auf.

Durch die größere Wandstärke im Vergleich zum Bekannten wird eine vorzeitige Abscheidung der Rohstoffe am Brenner verhindert und es erhöht sich die Prozessstabilität und die Lebensdauer der Gesamtanordnung.

Ein erster Teilstrom eines zuzuführenden Precursorgases wird durch ein sich innerhalb des Rohres 2 befindliches Rohr dem Substrat 4 quasi von unten zugeführt. Mindestens zwei Düsenketten 5, die versetzt gegenüberliegen, erzeugen den zweiten, tangiential orientierten Teilstrom des Precursorgases. Die Figur zeigt hierbei nur eine der Düsenketten 5.

Dieses Düsenpaar 5 ist so angeordnet, dass sich die Precursorgasströme unterhalb des Substrats 4 treffen und sich die Strömungen im Zentrum des Plasmas aufheben. Dabei befinden sich die Düsen 5 in einem Abstand A vom oberen Rand des äußeren Rohres 3 der Brenneranordnung.

Dieser Abstand kann im Bereich zwischen 1 mm und 10 mm liegen. Der Anstellwinkel der Düsen 5 zueinander kann im Bereich zwischen 45° und 90° liegen, wobei die Möglichkeit besteht, die Winkelposition variabel zu gestalten.

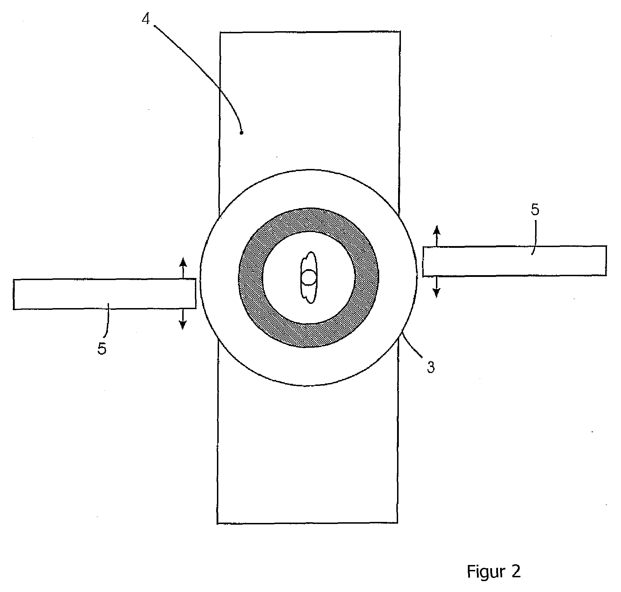

Die Fig. 2 zeigt eine Draufsicht auf die erfindungsgemäße Brenneranordnung mit erkennbarem äußeren Brennerrohr 3 sowie den versetzt gegenüberliegenden Düsenketten 5 und ein Teilstück des Substrats 4, d.h. des bei der Beschichtung rotierenden Kernglasstabs. Mit den Pfeilen symbolisiert ist die mögliche Bewegung der Düsenketten 5 in Längsrichtung des Substrats 4, wobei jedoch auch die Möglichkeit besteht, alternativ oder ergänzend die Düsen bzw. Düsenketten 5 aus der Bildebene heraus oder in diese hinein zu verschwenken.

## Patentansprüche

1. Mehrdüsiger, rohrförmiger Plasma-Abscheidebrenner (1) zur Herstellung von Vorformen als Halbzeuge für optische Fasern, wobei dem Brenner ein Medienstrom, enthaltend Glasausgangsmaterial und ein Trägergas, zugeführt wird, der Brenner enthaltend Mittel zur Zuführung mindestens eines Dotanden über mindestens ein Precursorgas wobei die Brennerlängsachse sich im Wesentlichen senkrecht zur Mittelachse des üblicherweise rotierenden Substrats (4) befindet, wobei ein erster Teilstrom eines Precursorgases über mindestens eine in Brennerlängsachse verlaufende Düse dem Plasma und dem Substrat (4) und ein zweiter Teilstrom des Precursorgases über eine weitere Düse dem Plasma und dem Substrat derart zugeführt ist, dass sich die Teilströme in Substratnähe vereinigen,
**dadurch gekennzeichnet, dass**
die weitere Düse als ein Düsenpaar, umfassend jeweils eine Gruppe von Einzeldüsen als Düsenkette (5) mit zwei oder mehr Einzeldüsen, versetzt zur Brennerlängsachse ausgebildet ist,
wobei das Düsenpaar zum Erzeugen des zweiten Teilstromes außerhalb des eigentlichen Brenners und beabstandet vom bezogen auf das Substrat nächsten Brennerrohr im Raum zwischen Substratoberfläche und Brenner befindlich ist,
wobei durch die zwei versetzt gegenüber liegenden Düsenketten (5) der zweite Teilstrom tangential bezüglich des Substrates orientiert ist und
das Düsenpaar der Düsenketten so angeordnet ist, dass sich die Precursorgasströme im Zentrum des Plasmas nahezu aufheben,
wobei die Düsenketten der Düsenpaare eine zueinander verstellbare Winkelposition aufweisen.

2. Brenner nach Anspruch 1,
**dadurch gekennzeichnet, dass**
das Düsenpaar sich außerhalb des Brenners (1), beabstandet vom bezogen auf das Substrat (4) nächsten Brennerrohr im Raum zwischen Substratoberfläche und Brenner befindet.

3. Brenner nach Anspruch 1,
**dadurch gekennzeichnet, dass**
mindestens eine der Düsenketten (5) zum Erzeugen einer auf die Rohrkonfiguration des Brenners bezogenen tangentialen Gasstromkomponente vorgesehen ist.

4. Brenner nach einem der vorangegangenen Ansprüche,
**dadurch gekennzeichnet, dass**
die Düsenkette (5) beweglich und verstellbar ausgeführt ist.

5. Brenner nach einem der vorangegangenen Ansprüche,
**dadurch gekennzeichnet, dass**
die in Brennerlängsachse verlaufende Düse zwei ineinander geführte dickwandige Rohre (2, 3) umfasst.

6. Brenner nach Anspruch 5,
**dadurch gekennzeichnet, dass**
die Rohre (2, 3) konzentrisch oder vom Konzentrischen abweichend ineinander positioniert sind, wobei die Wandstärke der Rohre im Bereich zwischen ≥ 2 mm bis im Wesentlichen 20 mm liegt.

7. Brenner nach Anspruch 5 oder 6,
**dadurch gekennzeichnet, dass**
das Innere der Rohranordnung einen größeren Abstand vom Plasmaraum als das äußere Rohr (3) der Rohranordnung besitzt.

8. Brenner nach einem der vorangegangenen Ansprüche,
**dadurch gekennzeichnet, dass**
die wenigstens eine Precursorgas-Zuführung eine Kammer zum Mischen und/oder Beruhigen des Gasstroms aufweist.

9. Brenner nach einem der vorangegangenen Ansprüche,
**dadurch gekennzeichnet, dass**
die Düsenketten (5) eine Plattenform und eine Vielzahl von Düsenbohrungen aufweisen.

10. Brenner nach einem der vorangegangenen Ansprüche,
**dadurch gekennzeichnet, dass**
die Brennerrohranordnung ein umgreifendes Rohr zum Zuführen eines schützenden Gas-, insbesondere eines Stickstoffvorhangs aufweist

11. Brenner nach einem der vorangegangenen Ansprüche,
**dadurch gekennzeichnet, dass**
die in Brennerlängsachse verlaufende Düse als Düsengruppe für sich im Plasma treffende Teilströme ausgebildet ist.

12. Brenner nach Anspruch 11,
**dadurch gekennzeichnet, dass**
die Düsengruppe Einzeldüsen aufweist, welche unterschiedliche oder veränderbare Düsenquerschnitte oder Querschnittsflächen besitzen.

13. Brenner nach einem der vorangegangenen Ansprüche,
**dadurch gekennzeichnet, dass**
die die Einzeldüsen der Düsenkette (5) als Schlitzdüse ausgebildet sind.

14. Brenner nach einem der vorangegangenen Ansprüche,
**dadurch gekennzeichnet, dass**
die Einzeldüsen der Düsenkette (5) als konzentrische Düsen ausgebildet sind.

15. Brenner nach einem der Ansprüche 1 bis 9,
**dadurch gekennzeichnet, dass**
die Düsenkette (5) als mehrzeilige Düsenkette mit übereinander liegenden oder versetzt zueinander liegenden Düsen ausgebildet ist.

16. Brenner nach Anspruch 3,
**dadurch gekennzeichnet, dass**
die tangentiale Gasstromkomponente in Rotationsrichtung der Plasmahelix verläuft.

17. Brenner nach Anspruch 4,
**dadurch gekennzeichnet, dass**
die die jeweilige Düsenkette (5) in Richtung der Bewegung des Substrats verstellbar ist.

18. Brenner nach Anspruch 8,
**dadurch gekennzeichnet, dass**
die Kammer als Vorkammer am vom Substrat entfernten Ende des Brenners in Brennerlängsrichtung verlaufend mit seitlicher Gaszuführung ausgebildet ist.

19. Verfahren zur Herstellung von Vorformen als Halbzeuge für optische Fasern mit Hilfe eines Abscheidebrenners nach einem oder mehreren der vorgenannten Ansprüche.

## Claims

1. A multi nozzle tubular plasma deposition burner (1) for producing pre forms providing blanks for optical fibers, wherein the burner is supplied with a media flow including glass base material and a carrier gas, wherein the burner includes devices for supplying at least one donor through at least one precursor gas, wherein the burner longitudinal axis is arranged essentially perpendicular to a center axis of a typically rotating substrate (4), wherein a first partial flow of a precursor gas is supplied to the plasma and the substrate (4) through at least one nozzle extending in the burner longitudinal axis and a second partial flow of the precursor gas is supplied to the plasma and the substrate through an additional nozzle so that the partial flows unite proximal to the substrate
**characterized in that**
the additional the nozzle is configured as a nozzle pair respectively including a group of individual nozzles configured as a nozzle chain (5) with two or more individual nozzles offset relative to the burner longitudinal axis,
wherein the nozzle pair for generating the second partial flow is arranged outside of the actual burner and offset from the a burner tube that is proximal to the substrate in the space between the substrate surface and the burner,
wherein the second partial flow is tangentially oriented with respect to the substrate through the two nozzle chains (5) that are arranged offset opposite to each other and the nozzle pair of the nozzle chains is arranged so that the precursor gas flows in the center of the plasma almost cancel each other,
wherein the nozzle chains of the nozzle pairs have angular positions that are adjustable relative to each other.

2. The burner according to claim 1,
**characterized in that**
the nozzle pair is arranged outside of the burner (1) offset from the burner tube proximal to the substrate (4) in the space between the substrate surface and the burner.

3. The burner according to claim 1,
**characterized in that**
at least one of the nozzle chains (5) is provided for generating a gas flow component that is tangential with respect to a tube configuration of the burner.

4. The burner according to one of the preceding claims,
**characterized in that**
the nozzle chain (5) is configured movable and adjustable.

5. The burner according to one of the preceding claims,
**characterized in that**
the nozzle extending in a longitudinal axis of the burner includes two thick wall tubes (2, 3) that are supported within each other.

6. The burner according to claim 5,
**characterized in that**
the tubes (2, 3) are positioned within each other in a concentric manner or in a non-concentric manner, wherein a wall thickness of the tubes is in a range between 2 mm or greater and up to essentially 20 mm.

7. The burner according to claim 5 or 6,
**characterized in that**
an interior of the tube arrangement has a greater distance from a plasma space than an outer tube (3) of the tube arrangement.

8. The burner according to one of the preceding claims,
**characterized in that**
the at least one precursor gas supply includes a chamber for mixing and/or calming the gas flow.

9. The burner according to one of the preceding claims,
**characterized in that**
the nozzle chains (5) are plate shaped and include plurality of nozzle bore holes.

10. The burner according to one of the preceding claims,
**characterized in that**
the burner arrangement includes a circumferential tube for supplying a protective gas curtain, in particular a nitrogen curtain.

11. The burner according to one of the preceding claims,
**characterized in that**
the nozzle extending in the burner longitudinal axis is configured as a nozzle group for partial flows joining in the plasma.

12. The burner according to claim 11,
**characterized in that**
the nozzle group includes individual nozzles which have different or variable nozzle cross sections or cross sectional surfaces.

13. The burner according to one of the preceding device claims,
**characterized in that**
the individual nozzles of the nozzle chain (5) are configured as slot nozzles.

14. The burner according to one of the preceding claims,
**characterized in that**
the individual nozzles of the nozzle chain (5) are configured as concentric nozzles.

15. The burner according to one of the claims 1 - 9,
**characterized in that**
the nozzle chain (5) is configured as a multi-line nozzle chain with nozzles that are configured above one another or offset from each other.

16. The burner according to claim 3,
**characterized in that**
the tangential gas flow component extends in a rotation direction of the plasma helix.

17. The burner according to claim 4,
**characterized in that**
a respective nozzle chain (5) is adjustable in a direction of a movement of the substrate.

18. The burner according to claim 18,
**characterized in that**
the chamber is configured as a pre-chamber that extends at an end of the burner that is remote from the substrate and extends in a burner longitudinal direction and which has a lateral gas supply.

19. A method for producing pre-forms as blanks for optical fibers using a deposition burner according to at least one of the preceding claims.

## Revendications

1. Torche à plasma (1) tubulaire à plusieurs buses pour fabriquer des ébauches en tant que semi-produits pour fibres optiques, dans laquelle la torche est alimentée en un courant de fluide contenant un matériau de base de verre et un gaz porteur, la torche comprenant des moyens pour alimenter au moins un dopant via au moins un gaz précurseur, l'axe longitudinal de la torche étant sensiblement perpendiculaire à l'axe central du substrat (4) habituellement en rotation, un premier courant partiel d'un gaz précurseur étant alimenté au plasma et au substrat (4) via au moins une buse s'étendant selon l'axe longitudinal de la torche et un second courant partiel du gaz précurseur étant alimenté au plasma et au substrat via une autre buse, de telle sorte que les courants partiels se réunissent à proximité du substrat,
**caractérisée en ce que**
l'autre buse est réalisée sous forme de paire de buses comprenant chacune un groupe de buses individuelles sous forme de chaîne de buses (5) avec deux buses individuelles ou plus décalées par rapport à l'axe longitudinal de la torche,
la paire de buses destinée à produire le second courant partiel se trouvant à l'extérieur de la torche proprement dite et à distance du tube de torche suivant en se référant au substrat, dans l'espace entre la surface du substrat et la torche,
le second courant partiel étant orienté tangentiellement par rapport au substrat en raison des deux chaînes de buses (5) opposées en décalage, et la paire de buses des chaînes de buses étant agencée de telle sorte que les courants de gaz précurseur s'annulent presque au centre du plasma, les chaînes de buses des paires de buses présentant une position angulaire réglable l'une par rapport à l'autre.

2. Torche selon la revendication 1,
**caractérisée en ce que**
la paire de buses se trouve à l'extérieur de la torche (1) à distance du tube de torche suivant en se référant au substrat (4) dans l'espace entre la surface du substrat et la torche.

3. Torche selon la revendication 1,
**caractérisée en ce que**
l'une au moins des chaînes de buses (5) est prévue pour produire une composante du courant de gaz tangentielle par rapport à la configuration tubulaire de la torche.

4. Torche selon l'une des revendications précédentes,
**caractérisée en ce que**
la chaîne de buses (5) est réalisée mobile et réglable.

5. Torche selon l'une des revendications précédentes,
**caractérisée en ce que**
la buse s'étendant selon l'axe longitudinal de la torche comprend deux tubes (2, 3) à paroi épaisse posés l'un dans l'autre.

6. Torche selon la revendication 5,
**caractérisée en ce que**
les tubes (2, 3) sont positionnés l'un dans l'autre de façon concentrique ou non concentrique, l'épaisseur de paroi des tubes étant dans la plage comprise entre ≥ 2 mm et sensiblement 20 mm.

7. Torche selon la revendication 5 ou 6,
**caractérisée en ce que**
l'intérieur de l'agencement tubulaire présente une distance plus grande de l'espace de plasma que le tube extérieur (3) de l'agencement tubulaire.

8. Torche selon l'une des revendications précédentes,
**caractérisée en ce que**
ladite au moins une alimentation en gaz précurseur comprend une chambre pour mélanger et/ou tranquilliser le courant de gaz.

9. Torche selon l'une des revendications précédentes,
**caractérisée en ce que**
les chaînes de buses (5) présentent une forme de plaque et une multitude de perçages de buse.

10. Torche selon l'une des revendications précédentes,
**caractérisée en ce que**
l'agencement tubulaire de torche comprend un tube d'entourage destiné à alimenter un gaz protecteur, en particulier un rideau d'azote.

11. Torche selon l'une des revendications précédentes,
**caractérisée en ce que**
la buse s'étendant selon l'axe longitudinal de la torche est réalisée sous forme de groupe de buses pour des courants partiels qui se rencontrent dans le plasma.

12. Torche selon la revendication 11,
**caractérisée en ce que**
le groupe de buses comprend des buses individuelles qui possèdent des sections de buses ou des aires de section différentes ou variables.

13. Torche selon l'une des revendications précédentes,
**caractérisée en ce que**
les buses individuelles des chaînes de buses (5) sont réalisées sous forme de buses à fente.

14. Torche selon l'une des revendications précédentes,
**caractérisée en ce que**
les buses individuelles de la chaîne de buses (5) sont réalisées sous forme de buses concentriques.

15. Torche selon l'une des revendications 1 à 9,
**caractérisée en ce que**
la chaîne de buses (5) est réalisée sous forme de chaîne de buses à plusieurs lignes comprenant des buses superposées ou décalées les unes par rapport aux autres.

16. Torche selon la revendication 3,
**caractérisée en ce que**
la composante tangentielle du courant de gaz s'étend en direction de rotation de l'hélice de plasma.

17. Torche selon la revendication 4,
**caractérisée en ce que**
la chaîne de buses respective (5) est réglable en direction du mouvement du substrat.

18. Torche selon la revendication 8,
**caractérisée en ce que**
la chambre est réalisée sous forme de chambre préalable à l'extrémité de la torche éloignée du substrat en s'étendant en direction longitudinale de la torche avec alimentation en gaz latérale.

19. Procédé pour fabriquer des ébauches en tant que semi-produits pour fibres optiques à l'aide d'une torche selon l'une ou plusieurs des revendications précédentes.
